# EUROPÄISCHE PATENTSCHRIFT

(11) **EP 0 581 007 B1**
(45) Veröffentlichungstag und Bekanntmachung des Hinweises auf die Patenterteilung: **18.12.1996**
(21) Anmeldenummer: 93109665.5
(22) Anmeldetag: 17.06.1993
(51) Int. Cl.: G01M 9/04

(54) **Bearbeitungsraum für Windkanal-Kryomodelle**
Processing chamber for cryogenic models in a wind tunnel
Chambre de traitement pour modèles cryogéniques dans une soufflerie

(30) Priorität: 30.07.1992 DE 4225152
(43) Veröffentlichungstag der Anmeldung: 02.02.1994
(73) Patentinhaber: EUROPEAN TRANSONIC WINDTUNNEL GmbH, 51147 Köln (DE)
(72) Erfinder: Bouis, Xavier, D-5000 Köln-Porz (DE); Tizard, John, D-5300 Bonn 2 (DE); Price, Ian A., D-5307 Wachtberg-Villiprott (DE); Wigley, David, c/o Cryogenic Marine and Materials, Southampton SO2 3PM (GB); Schimanski, Dieter, D-5204 Lohmar 1 (DE)
(74) Vertreter: Selting, Günther, Dipl.-Ing.

(56) Entgegenhaltungen:
- EP-A- 0 379 822
- CRYOGENICS Bd. 28 , Januar 1988 Seiten 10 - 21 D.A. DRESS, E.A. 'CRYOGENIC WIND TUNNEL RESEARCH: A GLOBAL PERSPECTIVE'

## Beschreibung

Die Erfindung betrifft einen Bearbeitungsraum für Windkanal-Kryomodelle, insbesondere für die Durchführung von Montage- und anderen Eingriffen an derartigen Modellen, die in einem Kryo-Windkanal getestet werden sollen.

Für aerodynamische Untersuchungen an Flugzeugmodellen o.dgl. im Tieftemperaturbereich werden Kryo-Windkanäle benutzt, in die das zu testende Modell eingebracht wird, um dort einem Kaltgasstrom ausgesetzt zu werden. Wenn ein solches Windkanalmodell unter normaler Umgebungstemperatur montiert und für den Windkanalversuch hergerichtet wird, ist es erforderlich, das Modell vor dem Einbringen in den Windkanal auf die Testtemperatur herunterzukühlen. Eine Kühlung im Windkanal selbst würde einen sehr hohen Energiebedarf für die aufzubringende Kaltluft erfordern. Aus "Aeronautical Journal", November 1984, S. 379 bis 394 ist es bekannt, ein Kryomodell nach seiner Herrichtung für den Windkanalversuch in eine Kühlkammer zu bringen und auf die Windkanaltemperatur herunterzukühlen. Wenn das Modell, nachdem es im Windkanal getestet worden ist, verändert werden muß, um einem weiteren Test unterzogen zu werden, wird das Modell in einen Quick-change-room gebracht, in dem es erwärmt wird, so daß eine Person an dem Modell hantieren kann. Der Quick-change-room bildet eine Behandlungskammer, die eine für Menschen atmungsfähige Atmosphäre enhält. Nach Beendigung der Behandlung des Modells wird dieses in die Kühlkammer transportiert und wieder auf Windkanalverhältnisse heruntergekühlt. Dieses System erfordert außer der Behandlungskammer eine separate Kühlkammer. Der zum Erwärmen und Kühlen des Modells erforderliche Energieaufwand ist sehr hoch.

Aus "Cryogenics", Vol. 28, Januar 1988, S. 10 bis 21 ist ein Windkanalsystem bekannt, das unter dem Testbereich des Windkanals einen Modell-Konditionierraum aufweist. Nach einem Testlauf bewegen die Operatoren das Modell und seinen Support von dem Testbereich in den Konditionierraum. Eine horizontale Schiebetür trennt den Konditionierraum von dem Windkanal. Für Modelländerungen wird das Modell mit warmem Stickstoff auf Umgebungstemperatur erwärmt. Bevor die Operatoren den Raum betreten, wird trockene Luft in den Raum befördert. Auch hier ist zur Erwärmung des Modells und zur anschließenden Kühlung eine große Energiemenge erforderlich.

Aus AGARD Report No. 774 "Special Course on Advances in Cryogenic Wind Tunnel Technology", S. 3-1 bis 3-12 ist es bekannt, in den Testbereich des Windtunnels seitlich einen Kanal einzuschieben, der Zugang zu dem im Testbereich befindlichen Modell ermöglicht und von Personen begangen werden kann. Hierzu ist es erforderlich, das Modell und den gesamten Testbereich des Windkanals auf die Umgebungstemperatur zu erwärmen, bevor an dem Modell hantiert werden kann.

Der Erfindung liegt die Aufgabe zugrunde, einen Bearbeitungsraum für Windkanal-Kryomodelle zu schaffen, mit dem die Durchführung von Arbeiten an kalten Modellen ermöglicht und der für Kalthaltung des Modells erforderliche Energieaufwand verringert wird.

Die Lösung dieser Aufgabe erfolgt erfindungsgemäß mit den Merkmalen des Patentanspruchs 1.

Der erfindungsgemäße Bearbeitungsraum für Kryomodelle enthält eine oben offene Isolierbox zur Aufnahme des Kryomodells. Das Modell kann in die Isolierbox von oben her eingeführt werden. Im Innern der Isolierbox wird eine tiefe Temperatur durch Einleiten von Kaltluft oder einem anderen kalten Gas aufrechterhalten, während die die Isolierbox umgebende Arbeitskammer im übrigen mit getrockneter Warmluft versorgt wird. Das Kryomodell kann von oben her in die Isolierkammer eingeführt und dort unter Kältebedingungen gehalten werden. Die in der Isolierbox enthaltene Kaltluft bleibt unter Schwerkrafteinfluß in der Isolierbox gefangen, während der die Isolierbox umgebende Bereich der Arbeitskammer mit getrockneter Warmluft auf einem höheren Temperaturniveau gehalten wird. Durch die Einleitung getrockneter Warmluft in die Arbeitskammer wird verhindert, daß sich an dem Modell oder in der Isolierbox Kondenswasser bildet. Der Taupunkt der zugeführten Warmluft liegt etwa im Bereich der Kaltgastemperatur in der Isolierkammer.

Ein in die Isolierbox eingebrachtes Kryomodell kann in der Isolierbox auf die Windkanaltemperatur heruntergekühlt werden oder, wenn es bereits im Windkanal gewesen ist, auf Windkanaltemperatur gehalten werden. Die mit der Durchführung von Arbeiten betrauten Personen können sich in der Arbeitskammer aufhalten, ohne eine besonders aufwendige Wärmeschutzkleidung tragen zu müssen. Sie benötigen lediglich Handschuhe und einen Atemschutz. Sie können mit den Händen von oben her in die Isolierbox greifen und an dem Kryomodell hantieren. Die Personen können die Arbeitskammer durch eine Tür betreten und verlassen, ohne dabei erheblichen Temperaturänderungen ausgesetzt zu sein. Infolge der relativ geringen Abmessungen der Isolierbox ist der für die Kalthaltung des Kryomodells erforderliche Energieaufwand gering. Das Volumen der Arbeitskammer kann als Trockenluftsperre betrachtet werden, die das kalte Volumen der Isolierbox von der außerhalb der Arbeitskammer herrschenden feuchten Umgebungsluft trennt. Die in der Arbeitskammer befindlichen Personen sollten Atemmasken tragen, um das Kryomodell gegen Feuchtigkeitsablagerungen zu schützen. Die Kaltluftzufuhr zu der Isolierbox sollte so bemessen sein, daß ständig ein ganz geringer Überlauf an Kaltluft über die Oberkanten der Wände der Isolierbox stattfindet. Die überlaufende Kaltluft vermischt sich sofort mit der in der Arbeitskammer enthaltenen Warmluft. Der Überlauf stellt sicher, daß keine Warmluft in die Isolierbox einfließen kann. In der Isolierbox wird die Kaltluft durch Schwerkrafteinwirkung am Aufsteigen gehindert. Es hat sich herausgestellt, daß die Stabilität der Kaltluft in der Isolierbox bemerkenswert gut ist. Der thermische Gradient zwischen dem Kaltgas in der Isolierkammer und der Umgebungsluft über der Isolierkammer konzentriert sich auf einen Bereich von etwa 20 cm unter der Oberkante der Isolierboxwände. Auch die thermische Wechselwirkung zwischen kalter Luft in der Isolierbox und warmer Luft in Arbeitskammer ist sehr gering.

Die Isolierbox kann auch dazu benutzt werden, Teile, die an einem Kryomodell befestigt werden sollen, auf die benötigte Temperatur herunterzukühlen und im kalten Zustand zu lagern.

Vorzugsweise besteht die Isolierbox aus modularen Wandelementen, die leicht lösbar miteinander verbunden sind. Auf diese Weise kann die Isolierbox entsprechend der Form und Größe des zu konditionierenden Kryomodells jeweils individuell gestaltet werden, so daß sie ein möglichst kleines Volumen hat.

Außerdem wird eine einfache, statische Belastung der Modelle ermöglicht. Belastungsvorrichtungen, die sich unterhalb des Bodens der Arbeitskammer befinden, werden mit Stahlseilen oder Stahlstangen mit Belastungsrahmen verbunden, die auf die verschiedenen Modelle aufgesetzt werden und individuell angepaßt sind. Spezielle Seiloder Stangendurchführungen in den Wänden bzw. im Boden der Isolierbox und der Arbeitskammer werden dementsprechend für jedes Modell angepaßt. Die Durchführungen der Stahlseile oder Stahlstangen können an den auseinandergebauten Wandelementen angebracht werden.

Zur Verdeutlichung der Temperaturbereiche sei angemerkt, daß typischerweise die Temperatur in der Arbeitskammer im Bereich von 300 bis 223 K verändert werden kann und die Temperatur in der Isolierbox im Bereich von 300 bis 100 K. Der Luftdruck in der Arbeitskammer sollte geringfügig über dem Atmosphärendruck liegen, um Eindringen von atmosphärischer Luft in die Arbeitskammer zu vermeiden. Der Überdruck beträgt typischerweise zwischen 50 Pa und 400 Pa.

Im folgenden wird unter Bezugnahme auf die Zeichnungen ein Ausführungsbeispiel der Erfindung näher erläutert.

Es zeigen:
- Fig. 1: eine Draufsicht des Bearbeitungsraumes,

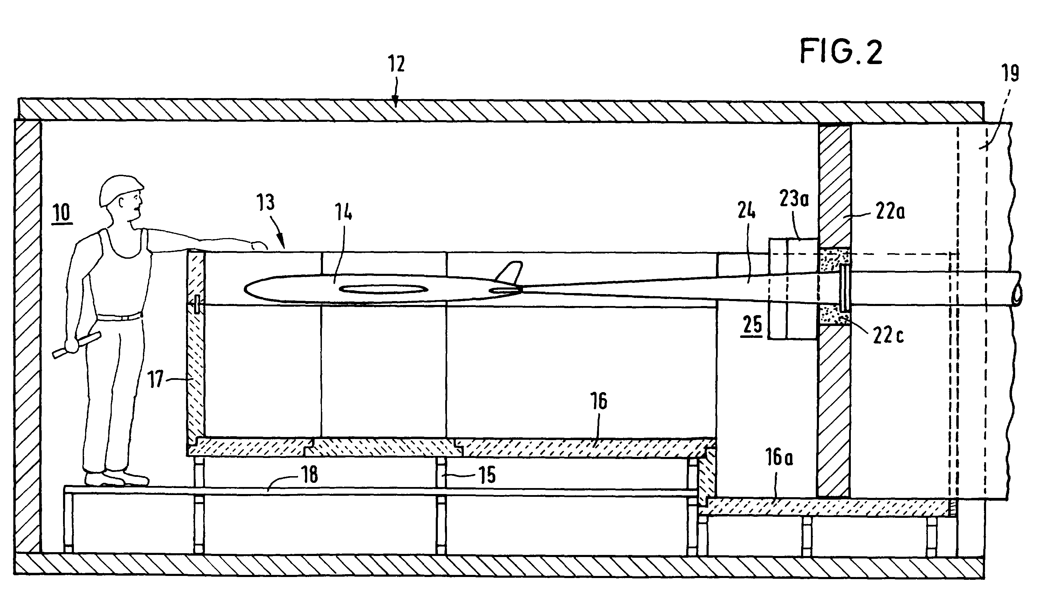

- Fig. 2: einen Schnitt entlang der Linie II-II von Fig. 1,
- Fig. 3: eine perspektivische Darstellung eines Teils der Isolierbox zur Erläuterung des Kaltluft-Zuführsystems,

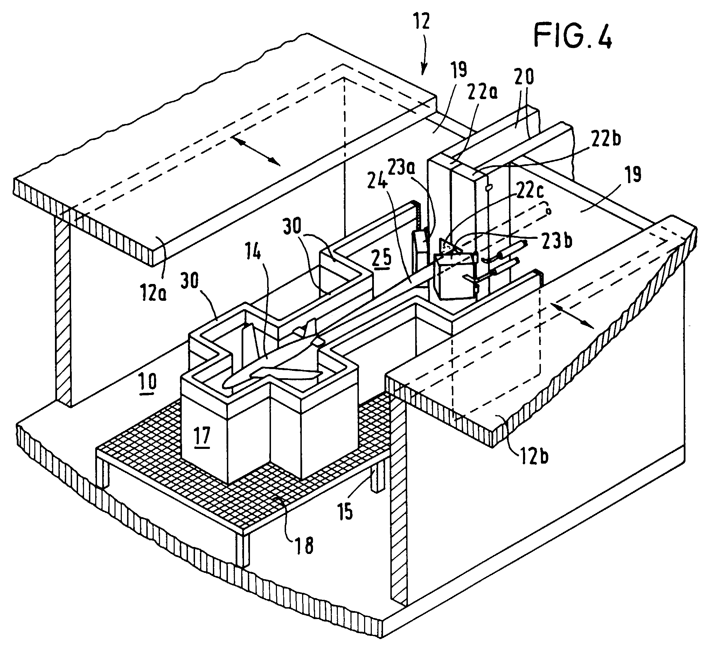

- Fig. 4: eine perspektivische Gesamtansicht des Bearbeitungsraumes und
- Fig. 5: eine perspektivische Darstellung des modularen Aufbaus der Isolierbox.

Der Bearbeitungsraum für Kryomodelle enthält eine gegen die Umgebung luftdicht abschließende Arbeitskammer 10 mit einer Tür 11 für den Zugang von Personen. Die Arbeitskammer 10 weist eine bewegbare Deckentür 12 aus zwei horizontalen Flügeln 12a,12b auf, die sich über die gesamte Länge der Arbeitskammer erstrecken und die auseinanderbewegt werden können, um die Arbeitskammer nach oben zu öffnen.

In der Arbeitskammer 10 befindet sich die Isolierbox 13 zur Aufnahme des zu testenden Kryomodells 14. Die Isolierbox 13 ist auf einem Gestell 15 mit Abstand über dem Boden der Arbeitskammer 10 angeordnet. Sie weist eine Bodenwand 16 und davon senkrecht aufragende Seitenwände 17 auf. Die Isolierbox 13 ist nach obenhin offen.

Außerhalb der Isolierbox befindet sich in der Arbeitskammer 10 eine Arbeitsbühne 18 mit Abstand über dem Boden der Arbeitskammer. Kaltluft, die aus der Isolierbox 13 überläuft und die auf den Boden der Arbeitskammer absinkt, gelangt nicht an die Füße der auf der Arbeitsbühne 18 stehenden Personen.

Die Isolierbox 13 reicht an einem Ende bis an eine Wand 19 der Arbeitskammer 10 heran. Durch eine Öffnung in dieser Wand 19 führt ein von Wänden 20 begrenzter Kanal 21 hindurch in die Isolierbox 13 hinein. Der oben offene Kanal 21 nimmt einen langgestreckten Halter 24 auf, an dem das Kryomodell 14 befestigt wird. Dieser Halter 24 kann an einem Laufkran befestigt sein, der den Halter mit dem Kryomodell vertikal bewegen und horizontal an eine entfernt liegende Stelle verfahren kann, um das Modell in den Windkanal einzuführen. An dem der Isolierbox zugewandten Ende des Kanals 21 ist eine Tür 22 mit zwei nach entgegengesetzten Seiten aufschwenkbaren Flügeln 22a,22b vorgesehen, die im geschlossenen Zustand den Kanal 21 begrenzt und das Ende der Isolierbox 13 gegen den Kanal verschließt. Die Flügel 22a und 22b tragen Adapterblöcke 22c,22d aus Isoliermaterial mit jeweils einem halbkreisförmigen Ausschnitt. Die Ausschnitte der Adapterblöcke 22c und 22d umschließen den Halter 24, wenn dieser sich in einer Position befindet, in der er das Kryomodell 14 in seiner Position in der Isolierbox 13 festhält. Der Halter 24 kann bei geschlossener Tür 22 um seine Längsachse herumgedreht werden, um das Kryomodell 14 ebenfalls um seine Längsachse zu drehen.

An den Flügeln 22a und 22b sind zusätzliche separat bewegbare Verschlußkappen 23a und 23b angebracht, die die Isolierbox 13 gegen den Kanal 21 verschließen, nachdem der Halter mit dem Modell entfernt wurde. Sind die Flügel 22a und 22b geschlossen und der Halter ist in Position, werden die Verschlußkappen 23a und 23b durch den Halter in geöffneter Position gehalten.

Der Kanal 21 und seine Tür 22 befinden sich in einer Schleusenkammer 25, die Bestandteil der Isolierbox 13 ist und deren Wände mit der Wand 19 der Arbeitskammer verbunden sind. Im Bereich der Schleusenkammer 25 ist der Boden 16a tiefer als der Boden 16 im übrigen Bereich der Isolierbox.

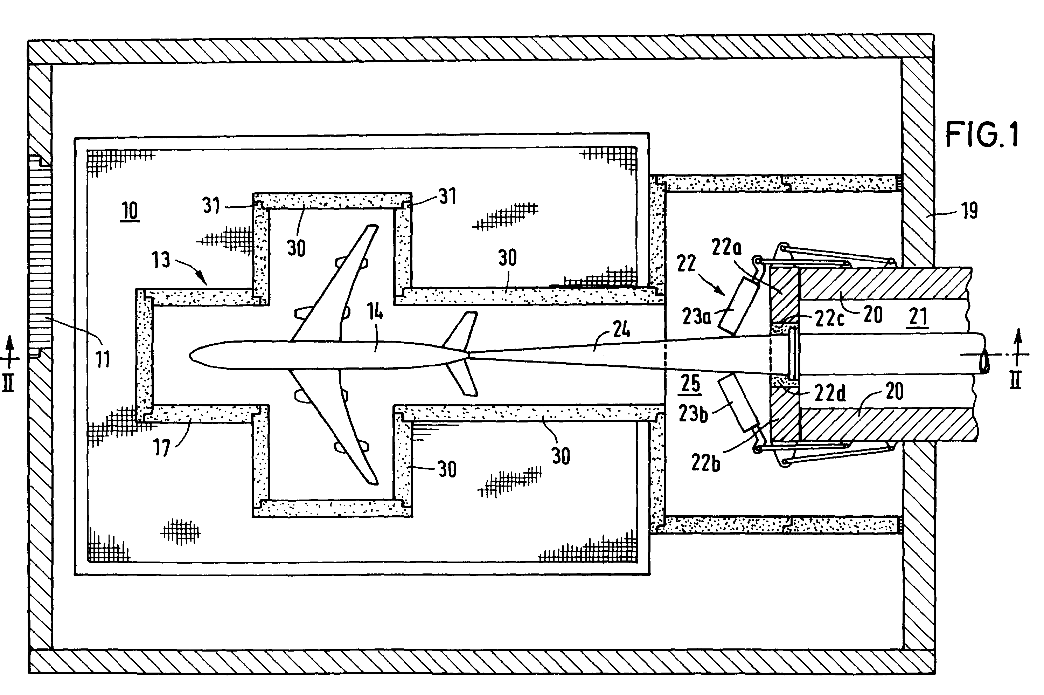

Wie insbesondere aus Fig. 1 hervorgeht, besteht die Isolierbox 13 aus modularen Wandelementen 30, die leicht lösbar miteinander verbunden sind und die nach Art eines Baukastensystems derart zusammengesetzt werden können, daß der Grundriß der Isolierbox 13 demjenigen des Kryomodells 14 weitgehend angepaßt werden kann. Die modularen Wandelemente 30 haben abgestufte vertikale Endkanten 31, so daß zwei benachbarte Wandelemente mit ihren Endkanten abdichtend ineinandergreifen können, wobei rechteckige Wandstrukturen erzeugt werden können.

Jedes der Wandelelemente 30 ist etwa 10 cm stark. Es weist eine isolierende Mittelschicht aus einem Material von geringer thermischer Masse auf, das an seinen Außenseiten mit einer Beschichtung aus Aluminium oder Edelstahl versehen ist.

Damit die trockene Luft in der Arbeitskammer nicht durch Feuchtigkeit oder sich von den Strukturelementen ablösende Materialien verunreinigt wird, bestehen sämtliche Metalloberflächen der Wandelemente und der sonstigen Strukturen aus unbeschichtetem Aluminium oder Edelstahl. Sämtliche Materialien, die Wasser enthalten, sind an ihren Außenseiten mit Wasserbarrieren versehen.

Die Wandelemente 30 reichen bis zu einer Höhe von 1,10 m über der Arbeitsbühne 18, so daß eine auf der Arbeitsbühne 18 stehende Person von oben her mit der Hand in die Isolierbox 13 eingreifen kann. Auf die Wandelemente 30 können weitere Wandelemente 30a mit einer Höhe von etwa 30 cm aufgesetzt werden, um die Größe der Isolierbox auf 1,40 m zu vergrößern. Die Wandelemente 30a haben generell die gleiche Struktur wie die Wandelemente 30.

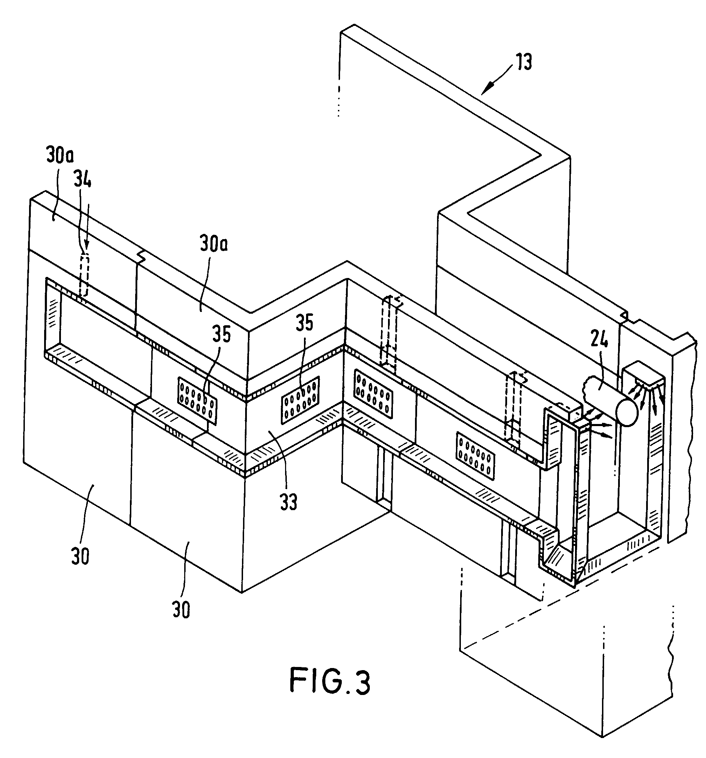

Die Wände der Isolierbox 13 enthalten Kaltluftkanäle 33 (Fig. 3), die innerhalb der Wandelemente 30 verlaufen. Ein Kaltluftkanal 33 weist einen Einlaß 34 auf, dem Kaltluft zugeführt wird. An den zum Innern der Isolierbox gewandten Seiten des Kaltluftkanals 33 befinden sich Auslässe 35 aus Lochgittern mit (nicht dargestellten) verschiebbaren Blenden, durch die der Durchtrittsquerschnitt verändert werden kann, um die aus jedem Auslaß 35 austretende Kaltluftmenge zu variieren. Die Kaltluft wird dem Kaltluftkanal 33 in einer solchen Rate zugeführt, daß gerade ein geringfügiger Kaltluftüberlauf über den oberen Rand der Isolierbox erfolgt.

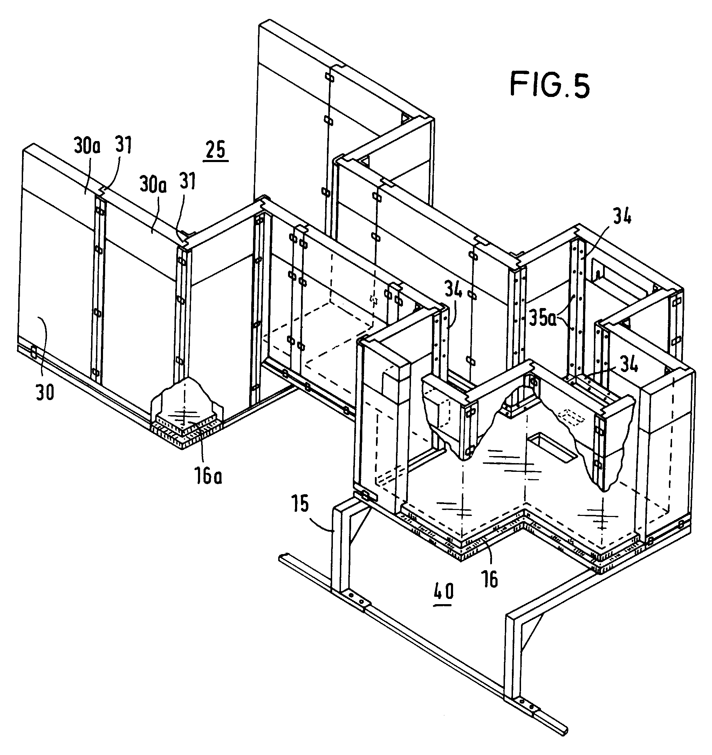

Fig. 5 zeigt den generellen Aufbau der Isolierbox mit den Wandelementen 30 und 30a. Benachbarte Wandelemente 30 sind untereinander und mit den Wandelementen 30a durch Winkelleisten 34 verbunden und mit Schrauben 35a befestigt. Auf dem Boden 16 sind die aufragenden Wandelemente 30 in der Weise befestigt, daß die Dichtheit des Anschlusses auch bei thermischen Längenänderungen aufrecht erhalten bleibt.

Wie ferner aus Fig. 5 ersichtlich ist, ist unter dem Boden 16 der Isolierbox ein den Zugang ermöglichender Raum 40 vorhanden. Auf dem Boden 16 können ggf. Stützstrukturen angebracht sein, um das Modell in der Isolierbox abzustützen.

Um zu vermeiden, daß eine auf der Arbeitsbühne stehende Person, die mit den Händen in das Innere der Isolierbox greift, mit der Oberkante der Wand der Isolierbox in Berührung kommt, können wärmeisolierende Kissen vorgesehen sein, die auf dem oberen Rand der Isolierbox 13 zu befestigen sind.

## Patentansprüche

1. Bearbeitungsraum für ein Windkanal-Kryomodell, mit einer verschließbaren, Arbeitskammer (10) und Mitteln zur Beheizung der Arbeitskammer mit getrockneter Luft, dadurch gekennzeichnet, daß die Arbeitskammer eine oben offene Isolierbox (13) aus wärmeisolierendem Material enthält, und daß Mittel zur Einleitung von kaltgas in die Isolierbox vorhanden sind.

2. Bearbeitungsraum nach Anspruch 1, dadurch gekennzeichnet, daß eine der die Isolierbox begrenzenden Wände (19) eine Tür (22) enthält, die derart ausgebildet ist, daß sie im geschlossenen Zustand einen das Kryomodell (14) tragenden Halter (24) durchläßt.

3. Bearbeitungsraum nach Anspruch 1 oder 2, dadurch gekennzeichnet, daß die Isolierbox (13) auf einem Gestell (15) mit Abstand über dem Boden der Arbeitskammer (10) ruht.

4. Bearbeitungsraum nach einem der Ansprüche 1 bis 3, dadurch gekennzeichnet, daß außerhalb der Isolierbox (13) eine Arbeitsbühne (18) mit Abstand über dem Boden der Arbeitskammer (10) vorgesehen ist.

5. Bearbeitungsraum nach einem der Ansprüche 1 bis 4, dadurch gekennzeichnet, daß die Arbeitskammer (10) über der Isolierbox (13) mindestens eine bewegbare Deckentür (12) aufweist, die das Herausheben des das Kryomodell (14) tragenden Halters (24) aus der Arbeitskammer (10) ermöglicht.

6. Bearbeitungsraum nach einem der Ansprüche 1 bis 5, dadurch gekennzeichnet, daß die Wände der Isolierbox (13) Kaltgaskanäle (33) mit in die Isolierbox hineinführenden Auslässen (35) enthalten.

7. Bearbeitungsraum nach einem der Ansprüche 1 bis 6, dadurch gekennzeichnet, daß die Isolierbox (13) aus bausteinartig kombinierbaren Wandelementen (30) besteht, die leicht lösbar zu unterschiedlichen Geometrien der Isolierbox (13) zusammensetzbar sind.

8. Bearbeitungsraum nach einem der Ansprüche 1 bis 7, dadurch gekennzeichnet, daß auf die Wände der Isolierbox (13) aufsetzbare Wandelemente (30a) vorgesehen sind, um die Wandhöhe zu vergrößern.

9. Bearbeitungsraum nach einem der Ansprüche 1 bis 8, dadurch gekennzeichnet, daß wärmeisolierende Kissen vorgesehen sind, die auf dem oberen Rand der Isolierbox (13) zu befestigen sind.

## Claims

1. A handling room for a wind-tunnel cryogenic model, comprising a closeable working chamber (10) and means for heating said working chamber by dried air,
**characterized in** that said working chamber comprises an open-topped insulating box (13) of heat-insulating material and that means are provided for introduction of cold gas into said insulating box.

2. The handling room according to claim 1, characterized in that one of the walls (19) limiting the insulating box is provided with a door (22) configured for allowing passage of a holder (24) carrying the cryogenic model (14) when the door is in its closed condition.

3. The handling room according to claim 1 or 2, characterized in that the insulating box (13) is supported on a rack (15) at a distance above the bottom of the working chamber (10).

4. The handling room according to any one of claims 1 to 3, characterized in that a working platform (18) is provided outside the insulating box (13) at a distance above the bottom of the working chamber (10).

5. The handling room according to any one of claims 1 to 4, characterized in that the working chamber (10) is provided, above the insulating box (13), with at least one movable top door (12) allowing the holder (24) carrying the cryogenic model (14) to be lifted out of the working chamber (10).

6. The handling room according to any one of claims 1 to 5, characterized in that the walls of the insulating box (13) include cold gas channels (33) having outlets (35) leading into the insulating box.

7. The handling room according to any one of claims 1 to 6, characterized in that the insulating box (13) consists of wall elements (30), adapted to be combined in a modular manner, which can be assembled into different geometrical configurations of the insulating box (13) while being easily releasable from each other.

8. The handling room according to any one of claims 1 to 7, characterized in that wall elements (30a) are provided to be mounted onto the walls of the insulating box (13) for increasing the height of said walls.

9. The handling room according to any one of claims 1 to 8, characterized in that heat-insulating pads are provided for attachment on the upper edge of the insulating box (13).

## Revendications

1. Chambre de traitement pour un modèle cryogénique dans une soufflerie, comprenant une chambre de travail (10), qui peut être fermée, et des moyens pour chauffer la chambre de travail avec de l'air séché, caractérisée en ce que la chambre de travail contient un compartiment d'isolation (13), ouvert sur le dessus, réalisé dans un matériau pour isolation thermique, et en ce qu'elle comprend des moyens pour introduire un gaz froid dans le compartiment d'isolation.

2. Chambre de traitement selon la revendication 1, caractérisée en ce que l'une des parois (19) délimitant le compartiment d'isolation est munie d'une porte (22), qui est conçue de telle sorte que, en position fermée, elle permette le passage d'un support (24) portant le modèle cryogénique (14).

3. Chambre de traitement selon la revendication 1 ou 2, caractérisée en ce que le compartiment d'isolation (13) repose sur un châssis (15), monté à une distance déterminée au-dessus du plancher de la chambre de travail (10).

4. Chambre de traitement selon l'une quelconque des revendications 1 à 3, caractérisée en ce qu'il est prévu de monter, à l'extérieur du compartiment d'isolation (13), une plate-forme de travail (18) à une distance déterminée au-dessus du plancher de la chambre de travail (10).

5. Chambre de traitement selon l'une quelconque des revendications 1 à 4, caractérisée en ce que la chambre de travail (10) est munie d'au moins une porte de couverture mobile (12), montée au-dessus du compartiment d'isolation (13), par laquelle il est possible de soulever le support (24) portant le modèle cryogénique (14) pour le sortir de la chambre de travail (10).

6. Chambre de traitement selon l'une quelconque des revendications 1 à 5, caractérisée en ce que les parois du compartiment d'isolation (13) contiennent des canaux de gaz froid (33), munis de sorties (35) qui communiquent avec le compartiment d'isolation.

7. Chambre de traitement selon l'une quelconque des revendications 1 à 6, caractérisée en ce que le compartiment d'isolation (13) est constitué par des éléments muraux (30), pouvant être combinés de manière modulaire, qui peuvent être assemblés de façon facilement démontable en différentes géométries du compartiment d'isolation (13).

8. Chambre de traitement selon l'une quelconque des revendications 1 à 7, caractérisée en ce qu'il est prévu de monter sur les parois du compartiment d'isolation (13) des éléments muraux démontables (30a), afin d'augmenter la hauteur des parois.

9. Chambre de traitement selon l'une quelconque des revendications 1 à 8, caractérisée en ce qu'il est prévu de poser des coussins d'isolation thermique, lesquels seront fixés sur le bord supérieur du compartiment d'isolation (13).
